# EUROPEAN PATENT APPLICATION

(11) **EP 4 414 072 A1**
(43) Date of publication of application: **14.08.2024**
(21) Application number: 22877882.5
(22) Date of filing: 28.09.2022
(51) Int. Cl.: B01J 29/08, B01J 35/10, C10G 11/05

(54) **CATALYTIC CRACKING CATALYST HAVING RICH MESOPOROUS STRUCTURE AND PREPARATION METHOD THEREFOR**

(30) Priority: 09.10.2021 CN 202111174446
(71) Applicant: China Petroleum & Chemical Corporation, Beijing 100728 (CN); Sinopec Research Institute of Petroleum Processing Co., Ltd., Beijing 100083 (CN)
(72) Inventor: YU, Shanqing, Beijing 100083 (CN); LIN, Wei, Beijing 100083 (CN); YUAN, Shuai, Beijing 100083 (CN); LIU, Yuqing, Beijing 100083 (CN); ZHANG, Jiexiao, Beijing 100083 (CN)
(74) Representative: Hoffmann Eitle
(86) International application number: PCT/CN2022/122059
(87) International publication number: WO 2023/056863

(57) **Abstract**

A catalytic cracking catalyst having a rich mesoporous structure and a preparation method therefor. The catalyst, on a dry basis, comprises: 10-35% by weight of a meso and macro pore aluminum oxide based on aluminum oxide, 5-30% by weight of an acidifying binder based on oxide, 2-20% by weight of a second binder based on oxide, 20-60% by weight of a zeolite, and 5-50% by weight of a clay; the meso and macro pore aluminum oxide is an aluminum oxide with a pseudo boehmite structure, which has a total pore volume of 0.5-2.0 mL/g, an average pore size of 5-30 nm, and a specific surface area of 250-450 m ²/g, wherein the pore volume of 5-100 nm pores accounts for 80% or more of the total pore volume; the weight ratio of the acidifying binder to the meso and macro pore aluminum oxide is 0.5-1.0. The catalytic cracking catalyst according to the present invention has a rich mesopore structure, a total pore volume not less than 0.200 mL/g, the pore volume of 2-100 nm meso and macro pores accounting for 70% or more of the total pore volume, and the pore volume of 4-50 nm mesoporous pores accounting for 60% or more of the total pore volume, as measured by a low-temperature nitrogen adsorption method. Therefore, it has a great attrition resistance strength, an enhanced heavy oil conversion capacity, a significantly improved coke selectivity.

## Description

### Technical field

The present invention pertains to the field of petroleum refining catalysts, and specifically relates to a catalytic cracking catalyst having a rich mesoporous structure and a preparation method therefor.

### Background technology

Promulgation and implementation of carbon emission regulations and low-carbon fuel standards have had a significant impact on the petroleum refining industry. As a conventional unit in the refining and processing of petroleum, catalytic cracking units have become a major emitter of carbon dioxide in the refining industry due to the catalyst coking and regeneration. Therefore, reducing the coke yield is the most effective way to reduce the carbon emission from catalytic cracking units. However, with an increasing trend of heavier and worse raw materials, the coke yield of catalytic cracking catalysts remains high. Catalysts with meso and macro pore structures are conducive to a rapid diffusion of reactant molecules and product molecules, a reduction of the production of coke precursors, simultaneously conducive to an improvement of the stripping performance of the catalysts and a reduction of the coke that can be stripped. Therefore, it is imperative to develop catalytic cracking catalysts with rich meso and macro pore structures.

The diameter of heavy oil molecules is about 3-10 nm. In order to eliminate diffusion limitations, the optimal range of the pore size of the catalytic cracking catalyst is 2-6 times the diameter of heavy oil molecules, corresponding to a pore size range of 6-60 nm. However, a traditional catalytic cracking catalyst has a pore size smaller than 4 nm, and cannot meet the need of heavy oil cracking.

CN1436835A discloses a catalytic cracking catalyst and its preparation method. The catalyst contains 5-60% by weight of the meso and macro pore aluminum oxide with an average pore diameter not smaller than 3 nm, 5-60% by weight of zeolite, 5-40% by weight of binder and 5-85% by weight of clay. The method of preparing the catalytic cracking catalyst is to mix zeolite with the meso and macro pore aluminum oxide, binder and clay evenly for preparation after undergoing spraying, calcination, washing and drying. However, the pore volume with a diameter greater than 2nm in the catalytic cracking catalyst is still less than 0.2 mL/g.

CN106179476A discloses a catalytic cracking catalyst as well as a preparation method and an application thereof. The catalytic cracking catalyst contains 1-50% by weight of a mesopore active material which has a pseudo boehmite crystal structure in an anhydrous chemical expression of (0-0.2) Na₂O·(40-85)Al₂O_{3·}(10-55)SiO_{2·}(0.5-10)P₂O₅·(0.5-10)MₓO_{y}, wherein metal M is one or more selected from the group consisting of Mg, and IIB, IIIB, IVB and VIIB group elements, and lanthanide rare-earth elements in the periodic table of elements, y is the highest valence state of the metal M when it is formed into an M oxide, and numerical values of x and y enable the valences of M and O to be balanced. The catalytic cracking catalyst has a low coke selectivity and a high catalytic cracking activity, and can obtain a high diesel yield and a low sulfur content of gasoline in the catalytic cracking of heavy oil. However, the prepared catalyst lacks meso and macro pore structures.

CN105688977A discloses a method for preparing a catalytic cracking catalyst containing pseudo boehmite. The method comprises: mixing and stirring a part of pseudo boehmite and a silicon-containing solution for 15 min or more to prepare a modified pseudo boehmite A; mixing the modified pseudo boehmite A, the residual pseudo boehmite B and clay for pulping to prepare a matrix slurry containing pseudo boehmite; mixing the matrix slurry and a zeolite slurry, homogenizing, moulding, drying and ion exchanging to obtain a catalytic cracking catalyst. The catalyst prepared according to the method has a high macro pore volume with the macro pore size mainly distributed above 100 nm, and lacks meso and macro pore structures of 5 to 100nm.

However, due to a poor adhesion of meso and macro pore materials per se, their direct addition would affect the strength of the catalyst, limiting the amount of meso and macro pore materials added and resulting in an insignificant increase of the meso and macro pore structures. Therefore, preparing catalytic cracking catalysts with a rich mesoporous structure and a good attrition resistance is still a hot research topic.

### Summary of the invention

To address the aforementioned issues, the present invention provides a catalytic cracking catalyst with a rich mesoporous structure, and a preparation method therefor. This catalytic cracking catalyst has a good attrition index, a rich mesoporous structure, a strong heavy oil conversion ability, and a good coke selectivity.

On one hand, the present invention provides a composition for catalytic cracking, which, based on a dry weight of the composition, comprises: 10-35% by weight of a meso and macro pore aluminum oxide, 5-30% by weight of an acidifying binder, 2-20% by weight of a second binder, 20-60% by weight of a zeolite and 5-50% by weight of a clay, a weight ratio of the acidifying binder to the meso and macro pore aluminum oxide being 0.5-1.0; the meso and macro pore aluminum oxide is an aluminum oxide with a pseudo boehmite structure, which has a total pore volume of 0.5-2.0 mL/g, an average pore size of 5-30 nm, and a specific surface area of 250-450 m ²/g, wherein a pore volume of pores with a pore size of 5-100 nm accounts for 80% or more of the total pore volume. Preferably, after spray drying and calcination, the composition has an attrition index of not more than 3.0% · h⁻¹, preferably 1.0-3.0% · h⁻¹, and a pore volume retention of 70% or higher, preferably 80%-100%, for the 5-100 nm pores; the pore volume retention for the 5-100 nm pores = the pore volume of the 5-100 nm pores in a catalytic cracking catalyst/(the pore volume of the 5-100 nm pores in the meso and macro pore aluminum oxide × a content of the meso and macro pore aluminum oxide in the catalytic cracking catalyst).

In one embodiment, based on the dry weight of the composition, the composition comprises: 10-30% by weight of the meso and macro pore aluminum oxide, 8-25% by weight of the acidifying binder, 2-15% by weight of the second binder, 30-45% by weight of the zeolite, and 10-40% by weight of the clay, the weight ratio of the acidifying binder to the meso and macro pore aluminum oxide being 0.5-0.8; the meso and macro pore aluminum oxide is an aluminum oxide with a pseudo boehmite structure, which has a total pore volume of 0.7-1.5 mL/g, an average pore size of 6-20 nm, and a specific surface area of 300-400 m ²/g, wherein the pore volume of the pores with a pore size of 5-100 nm accounts for 80%-95% of the total pore volume.

In one embodiment, the acidifying binder is one or more selected from the group consisting of aluminum sol, silica sol, silica aluminum sol, preferably aluminum sol or silica sol. The second binder is one or more selected from the group consisting of acidifying pseudo boehmite, silica sol, aluminum sol, silica aluminum sol, aluminum phosphate sol, zirconium sol, preferably aluminum sol, silica sol or acidifying pseudo boehmite. The weight ratio of the acidifying binder to the second binder is 0.5-5.0.

In one embodiment, the zeolite is one or more selected from the group consisting of NaY type zeolite, Y zeolite with a high silica-alumina ratio (such as HY, REY, REHY, USY, or REUSY) obtained after modification of NaY type zeolite, MFI type zeolite, and β zeolite.

In one embodiment, the clay is various clays such as kaolin, bentonite, montmorillonite, sepiolite, diatomaceous earth, etc. that can serve as a catalyst component.

On the other hand, the present invention also provides a method for preparing a catalytic cracking catalyst using the composition according to the present invention, which comprises following steps, and these steps are preferably carried out in order:
(1) mixing and stirring aluminum oxide with a meso and macro pore structure, a clay and all acidifying binders as needed evenly to obtain an acidified slurry;
(2) adding a zeolite to the acidified slurry, mixing and stirring evenly to obtain a second slurry; and
(3) adding a second binder to the second slurry, mixing and stirring, spray drying and calcining an obtained mixed slurry to obtain the catalytic cracking catalyst of the present invention.

In one embodiment, according to the preparation method provided by the present invention, in the step (1), based on the dry weight of the catalyst, 10-35% by weight of the aluminum oxide with a meso and macro pore structure, 5-50% by weight of the clay, 5-30% by weight of the acidifying binder are mixed with deionized water and pulped for not less than 15min to obtain an acidified slurry. The solid content of the resulting acidified slurry is 15-40% by weight.

In one embodiment, in the step (2), 20-60 weight% of the zeolite is added to the acidified slurry, mixed and pulped for not less than 15min to obtain a second slurry with a solid content of 15-40 % by weight.

In one embodiment, in the step (3), 2-20 % by weight of the second binder is added to the second slurry, and the resulting mixed slurry has a solid content of 15-40% by weight.

According to a particularly preferred embodiment of the present invention, no other acid is added in the method of preparing the catalytic cracking catalyst using the composition of the present invention. For the purpose of the present invention, "no other acid is added" means that the acidification required for the catalyst preparation is entirely carried out through the acidifying binder according to the present invention. Correspondingly, in the method according to the present invention, no other acid, such as commonly used hydrochloric acid, is added, whether for acidification or other purposes.

Further, the present invention also provides a catalytic cracking catalyst, which is prepared by the composition of the present invention according to the method described in the present invention.

In one embodiment, the catalytic cracking catalyst provided according to the present invention has a rich mesoporous structure. As determined by the low-temperature nitrogen adsorption method, the total pore volume of the catalytic cracking catalyst is not less than 0.200 mL/g, preferably 0.200-0.300 mL/g, wherein the pore volume of the meso and macro pores with a pore size of 2-100 nm accounts for 70% or more of the total pore volume, preferably 75%-95%, and the pore volume of the mesoporous pores with a pore size of 4-50 nm accounts for 60% or more of the total pore volume, preferably 65%-85%.

The present invention has the following advantages compared to the prior art: on one hand, in the prior art, the meso and macro pore aluminum oxide is acidified to improve the catalyst attrition performance; however, the acidification would lead to the disappearance of its original meso and macro pore structure, resulting in a decrease in the heavy oil conversion ability and the coke selectivity of the catalyst; on the other hand, in the prior art, the meso and macro pore aluminum oxide materials are directly added, without acidification, to the catalyst to increase the macropore volume, but this leads to the worsening of the attrition performance of the catalyst. In contrast, according to the method for preparing the catalytic cracking catalyst in the present invention, the meso and macro pore structure of the meso and macro pore aluminum oxide is retained, and the heavy oil conversion ability and the coke selectivity are improved, and the adverse effect of the meso and macro pore aluminum oxide on catalyst strength is overcome at the same time.

Therefore, the catalytic cracking catalyst provided by the present invention has a rich mesoporous structure of 4-50 nm, a good attrition resistance strength, an enhanced catalyst heavy oil conversion ability, and a significantly improved coke selectivity compared to conventional catalysts.

### Description of the drawings

Figure 1 is a pore distribution diagram of the meso and macro pore aluminum oxide used in the present invention.
Figure 2 is a pore distribution diagram of the catalytic cracking catalyst prepared according to Example 1.
Figure 3 is a pore distribution diagram of the catalytic cracking catalyst prepared according to Comparative Example 1.

### Specific embodiments

The present application is further illustrated in detail as follows in conjunction with the drawings and the examples. Through these illustrations, the characteristics and the advantages of the present application would become clearer and more explicit.

In addition, the technical features involved in different embodiments of the present application described below can be combined with each other as long as they do not conflict with each other.

The present invention provides a composition for catalytic cracking, which, based on the dry weight of the composition, comprises 10-35% by weight, preferably 10-30% by weight of a meso and macro pore aluminum oxide, 5-30% by weight, preferably 8-25% by weight of an acidifying binder, 2-20% by weight, preferably 2-15% by weight of a second binder, 20-60% by weight, preferably 30-45% by weight of a zeolite, and 5-50% by weight, preferably 10-40% by weight of a clay; the weight ratio of the acidifying binder to the meso and macro pore aluminum oxide is 0.5-1.0, preferably 0.5-0.8. The meso and macro pore aluminum oxide is an aluminum oxide with a pseudo boehmite structure, which has a total pore volume of 0.5-2.0 mL/g, preferably 0.7-1.5 mL/g, an average pore size of 5-30 nm, preferably 6-20 nm, and a specific surface area of 250-450 m²/g, preferably 300-400 m²/g, wherein the pore volume of the 5-100 nm pores accounts for 80% or more of the total pore volume, preferably 80%-95%. Preferably, after spray drying and calcination, the composition has an attrition index of not more than 3.0% · h⁻¹, preferably 1.0-3.0% · h⁻¹, and a pore volume retention of 70% or higher, preferably 80%-100%, for 5-100 nm pores; the pore volume retention for the 5-100 nm pores = the pore volume of the 5-100 nm pores in the catalytic cracking catalyst/(the pore volume of the 5-100 nm pores in the meso and macro pore aluminum oxide × the content of the meso and macro pore aluminum oxide in the catalytic cracking catalyst).

In one embodiment, the aluminum oxide with a pseudo boehmite structure can be prepared according to the methods provided in patents US4010116 and US4206085, and the entire texts thereof are introduced as a reference.

In one embodiment, the acidifying binder can be one or more selected from the group consisting of aluminum sol, silica sol, silica aluminum sol, preferably aluminum sol, and the second binder refers to one or more of acidifying pseudo boehmite, silica sol, aluminum sol, silica aluminum sol, aluminum phosphate sol, zirconium sol, preferably acidifying pseudo boehmite.

In one embodiment, the zeolite can be one or more selected from the group consisting of NaY type zeolite, Y zeolite with a high silica-alumina ratio (such as REY, HY, REHY, USY, REUSY) obtained after modification of NaY type zeolite, MFI type zeolite, β zeolite.

In one embodiment, the clay is various clays such as kaolin, bentonite, montmorillonite, sepiolite, diatomaceous earth, etc. that can serve as a catalyst component. These clays are generally known by those skilled in the art.

The present invention also provides a method for preparing a catalytic cracking catalyst using the composition according to the present invention, which comprises following steps, and these steps are preferably carried out in order:
(1) mixing and stirring aluminum oxide with a meso and macro pore structure, a clay, and an acidifying binder evenly to obtain an acidified slurry;
(2) adding a zeolite to the acidified slurry, mixing and stirring evenly to obtain a second slurry; and
(3) adding a second binder into the second slurry, mixing and stirring, spray drying and calcining the obtained mixed slurry to obtain the catalytic cracking catalyst of the present invention.

In one embodiment, according to the preparation method provided by the present invention, in the step (1), the aluminum oxide with a meso and macro pore structure, a clay, an acidifying binder are mixed with deionized water and pulped for not less than 15 min, preferably 20-60 min to obtain an acidified slurry with a solid content of 15-40% by weight.

In one embodiment, in the step (2), a zeolite is added to the resulting acidified slurry, mixed and pulped for not less than 15 min, preferably 20-60 min to obtain a second slurry with a solid content of 15-40 % by weight.

In one embodiment, in the step (3), a second binder is added to the resulting second slurry, and the resulting mixed slurry has a solid content of 15-40% by weight.

In one embodiment, the spray drying and calcination are carried out according to the existing methods, and there are no particular requirements in the present invention. The method also includes the processes such as washing and drying after a catalyst calcination, which can be carried out according to existing methods, and there are no particular requirements in the present invention.

The present invention also provides a catalytic cracking catalyst, which is prepared by the composition of the present invention according to the method described in the present invention. The catalytic cracking catalyst provided according to the present invention has a rich mesoporous structure. As determined by the low-temperature nitrogen adsorption method, the total pore volume of the catalytic cracking catalyst is not less than 0.200 mL/g, preferably 0.200-0.300 mL/g, wherein the pore volume of the 2-100 nm meso and macro pores accounts for 70% or more of the total pore volume, preferably 75%-95%, and the pore volume of the 4-50 nm mesoporous pores accounts for 60% or more of the total pore volume, preferably 65%-85%.

### Examples

The following examples would provide a further illustration of the present invention, aiming to help readers better understand the essence of the present invention and the beneficial effects which it brings, but they should not be understood as any limitations on the implementable scope of the present invention.

The raw materials used to prepare the catalyst cracking catalyst in the following examples are described as follows: kaolin has a solid content of 76% by weight; aluminum sol has an aluminum oxide content of 21.5% by weight; silica sol has a SiO₂ content of 27.0% by weight; the properties of the conventional pseudo boehmite and meso and macro pore aluminum oxide are shown in Table 1; the acidifying pseudo boehmite has a solid content of 12.0% by weight; hydrochloric acid acidification, the molar ratio of acid (HCl) to aluminum oxide being 0.20 when being acidified; the rare earth ultrastale Y-type zeolite REUSY used has a solid content of 85.0% by weight, a cell constant of 24.51 Å, and has a Na₂O content of 1.6% and a RE₂O₃ content of 12.0% based on the weight percentage content. The meso and macro pore aluminum oxides A~D are provided by Sinopec Catalyst Co., Ltd., and their properties are shown in Table 1.

**Table 1: properties of a part of materials**

| name of the sample | pseudo boehmite | meso and macro pore aluminum oxide A | meso and macro pore aluminum oxide B | meso and macro pore aluminum oxide C | meso and macro pore aluminum oxide D |
|---|---|---|---|---|---|
| solid content, % | 73.8 | 70.0 | 70.8 | 72.2 | 70.9 |
| ACR, % | 88.6 | 68.8 | 82.3 | 85.6 | 86.6 |
| Al₂O₃ content, % | 98.6 | 96.6 | 99.5 | 99.7 | 98.5 |
| BET specific surface, m²/g | 231 | 307 | 385 | 389 | 386 |
| total pore volume, mL/g | 0.42 | 0.95 | 1.0 | 0.9 | 1.1 |
| 5-100 nm pores in the total pore volume, % | 25 | 82 | 89 | 84 | 92 |
| average pore size, nm | 4.9 | 7.5 | 15.0 | 18.2 | 14.3 |

Analysis and evaluation methods are described as follows:
Specific surface area and pore volume analysis: by using U.S. Micromeritics ASAP 2405N V1.01 automated adsorption analyzer, according to a low-temperature nitrogen adsorption static volumetric method, the sample was vacuum degassed at 1.33 × 10⁻² Pa, 300 °C for 4h, and by using N₂ as an adsorption medium, the adsorption-desorption isotherm of the sample was measured at 77.4 K. According to the BET formula, the specific surface area of the sample was calculated. The volume of N₂ adsorbed by the sample at a relative pressure of p/p₀=0.98 was measured, and converted to a liquid nitrogen volume, i.e. the total pore volume. The micropore volume was calculated according to a t-plot method. The difference between the two is the volume of the 2-100 nm meso and macro pores, wherein the pore volumes of both the 4-50 nm mesoporous pores and the 5-100 nm meso and macro pores are obtained using a peak fitting method.

Catalyst strength: a certain amount of catalyst is placed in a fixed device and blow-ground under a constant airflow for 5h, the average attrition percentage in the last four hours except for the first hour is called the catalyst attrition index, measured in% per hour. The method and standard are: airlift method Q/SYLS0518-2002.

Evaluation of the catalytic cracking catalyst: the catalytic cracking catalyst is pre-aged at 800 °C, 100% steam for 12h on a fixed bed aging device, and then evaluated on an ACE device. The properties of the reaction raw oil are shown in Table 8. The reaction temperature is 500 °C and the weight ratio of the catalyst to oil is 8.04. Therein, conversion rate=gasoline yield+liquefied gas yield+dry gas yield+coke yield, coke selectivity=coke yield/conversion rate.

### Example 1

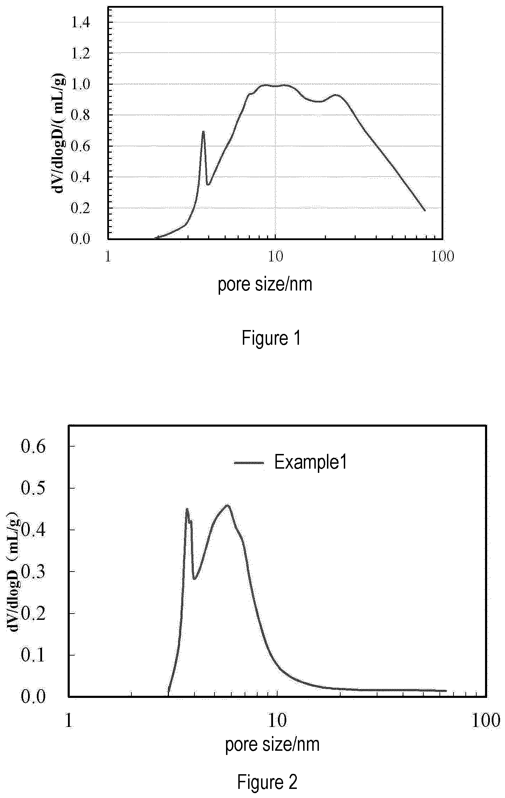

142g of kaolin and 114g of the meso and macro pore aluminum oxide A were added to 291g of water, and after stirring for 15min, 279g of aluminum sol was added to obtain an acidified slurry after a continued stirring of 60min; a zeolite slurry (which contains 155g of REUSY zeolite and a solid content of 35 % by weight in the zeolite slurry) was added to the acidified slurry to obtain a second slurry after a continued stirring of 30min; 93g aluminum sol was added to the second slurry, and after a continued stirring of 30min, the obtained total slurry was spray-dried to be moulded and then calcined at 500 °C for 2h to obtain a catalytic cracking catalyst C1 of the present invention. The pore distribution of the obtained catalyst C1 is shown in Figure 2. The composition and the properties of the catalyst are shown in Table 2.

### Example 2

153g of kaolin and 86g of the meso and macro pore aluminum oxide B were added to 440g of water, and after stirring for 30min, 186g of aluminum sol was added to obtain an acidified slurry after a continued stirring of 60min; a zeolite slurry (which contains 169g of REUSY zeolite and a solid content of 38% by weight in the zeolite slurry) was added to the acidified slurry to obtain a second slurry after a continued stirring of 40min; 333g of the acidified pseudo boehmite was added to the second slurry, and after a continued stirring of 60min, the resulting total slurry was spray-dried to be moulded and then calcined at 500 °C for 2h to obtain a catalytic cracking catalyst C2 of the present invention. The composition and the properties of the catalyst are shown in Table 2.

### Example 3

100g of kaolin and 139g of the meso and macro pore aluminum oxide C were added to 578g of water, and after stirring for 20min, 279g of aluminum sol and 74g of silica sol were added to obtain an acidified slurry after a continued stirring of 60min; a zeolite slurry (which contains 141g of REUSY zeolite and a solid content of 38% by weight in the zeolite slurry) was added to the acidified slurry to obtain a second slurry after a continued stirring of 60min; 111g of aluminum sol was added to the second slurry, and after a continued stirring of 30min, the resulting total slurry was spray-dried to be moulded and then calcined at 500 °C for 2h to obtain a catalytic cracking catalyst C3 of the present invention. The composition and the properties of the catalyst are shown in Table 2.

### Example 4

153g of kaolin, 56g of the meso and macro pore aluminum oxide D, and 149g of aluminum sol were added to 179g of water to obtain an acidified slurry after mixing evenly and stirring for 90min; a zeolite slurry (which contains 179g of REUSY zeolite and a solid content of 35% by weight in the zeolite slurry) to the acidified slurry to obtain a second slurry after a continued stirring of 60min; 500g of the acidifying pseudo boehmite was added to the second slurry, and after a continued stirring of 60min, the resulting total slurry was spray-dried to be moulded and then calcined at 550 °C for 1.5h to obtain a catalytic cracking catalyst C4 of the present invention. The composition and the properties of the catalyst are shown in Table 2.

### Example 5

63g of kaolin and 169g of the meso and macro pore aluminum oxide D were added to 474g of water, and after stirring for 45min, 372g of aluminum sol was added to obtain an acidified slurry after a continued stirring of 60min; a zeolite slurry (which contains 155g of REUSY zeolite and a solid content of 35% by weight in the zeolite slurry) was added to the acidified slurry to obtain a second slurry after a continued stirring of 60min; 74g of silica sol was added to the second slurry, and after a continued stirring of 30min, the resulting total slurry was spray-dried to be moulded and then calcined at 500 °C for 2h to obtain a catalytic cracking catalyst C5 of the present invention. The composition and the properties of the catalyst are shown in Table 2.

### Comparative Example 1

In the present Comparative Example, a conventional acidification method is used to firstly acidify the meso and macro pore aluminum oxide with hydrochloric acid, and then prepare a catalytic cracking catalyst.

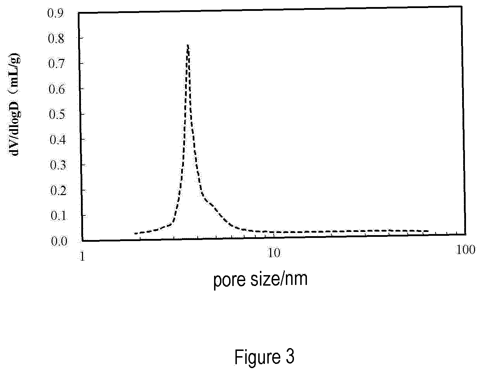

114g of the meso and macro pore aluminum oxide A was added to 286g of water, and after stirring for 15min, 16g of 36% hydrochloric acid was added for acidification (according to an acid aluminum weight ratio of 0.20) to obtain an acidified slurry after stirring for 60min; 142g of kaolin was added to 138g of water, and after stirring for 60 min, a zeolite slurry (which contains 155g of REUSY zeolite and a solid content of 35 % by weight of zeolite slurry) was added to obtain a second slurry after a continued stirring of 30min; the acidified slurry was mixed with the second slurry and stirred for 30min, and then 372g of aluminum sol was added and mixed evenly for 60min The resulting slurry was spray-dried to be moulded, and then calcined at 500 °C for 2h to obtain a comparative catalyst DC1. The pore distribution of the obtained catalyst DC1 is shown in Figure 3. The composition and the properties of the catalyst are shown in Table 2.

### Comparative Example 2

In the present Comparative Example, the meso and macro pore aluminum oxide was directly used to prepare a catalytic cracking catalyst without pre-mixing with an acidifying binder.

114g of the meso and macro pore aluminum oxide A and 142g of kaolin were added to 811g of water to obtain an acidified slurry after stirring for 60min; a zeolite slurry (which contains 155g of REUSY zeolite and a solid content of 35 % by weight in the zeolite slurry) was added to obtain a second slurry after a continued stirring of 30min; an addition of 372g of aluminum sol was continued and mixed evenly for 30min, and the resulting total slurry was spray-dried to be moulded and calcined at 500 °C for 2h to obtain a comparative catalyst DC2. The composition and the properties of the catalyst are shown in Table 2.

### Comparative Example 3

A catalytic cracking catalyst was prepared according to the method described in Example 1 of CN1436835A.

615g of the meso and macro pore aluminum oxide A, 1555g of REUSY zeolite, 1628g of aluminum sol, 2093g of kaolin and 9000g of deionized water were sufficiently mixed, stirred for 2h, homogenized and spray-dried to be moulded, and the resulting microspheres were calcined at 450 °C for 0.5h to obtain a control catalyst catalyst DC3. The composition and the properties of the catalyst are shown in Table 2.

**Table 2: catalyst composition and properties**

| | Example 1 | Example 2 | Example 3 | Example 4 | Example 5 | Comparative example 1 | Comparative example 2 | Comparative example 3 |
|---|---|---|---|---|---|---|---|---|
| catalyst | C1 | C2 | C3 | C4 | C5 | DC1 | DC2 | DC3 |
| meso and macro pore aluminum oxide, % | 20 | 15 | 25 | 10 | 30 | 20 | 20 | 10 |
| kaolin, % | 27 | 29 | 19 | 29 | 12 | 27 | 27 | 47 |
| acidifying binder, % | 15 | 10 | 20 | 8 | 20 | -- | -- | -- |
| zeolite, % | 33 | 36 | 30 | 38 | 33 | 33 | 33 | 33 |
| second binder, % | 5 | 10 | 6 | 15 | 5 | 20 | 20 | 10 |
| acidified slurry solid content, % | 30 | 25 | 22 | 35 | 23 | -- | -- | -- |
| second slurry solid content, % | 28 | 25 | 19 | 30 | 24 | -- | -- | -- |
| total slurry solid content, % | 27.5 | 22.9 | 27.4 | 24.2 | 23.7 | 25.0 | 25.0 | 25.0 |
| weight ratio of acidifying binder to meso and macro pore aluminum oxide | 0.75 | 0.67 | 0.80 | 0.80 | 0.67 | -- | -- | -- |
| attrition index, m%/h | 2.2 | 2.5 | 1.8 | 2.8 | 2.2 | 2.5 | 6.5 | 3.6 |
| total pore volume, mL/g | 0.24 | 0.23 | 0.23 | 0.22 | 0.25 | 0.18 | 0.19 | 0.17 |
| 2-100nm pore volume in total pore volume, % | 85 | 80 | 78 | 88 | 85 | 54 | 60 | 58 |
| 4-50nm pore volume in total pore volume, % | 79 | 72 | 70 | 80 | 75 | 48 | 50 | 44 |

### Example 6

The catalysts C1-C5 prepared in Examples 1-5 and the catalysts DC1~DC3 prepared in Comparative Examples 1-3 were pre-aged at 800 °C, 100% steam for 12h on a fixed bed aging device, and then evaluated on an ACE device. The properties of the reaction raw oil are shown in Table 3. The reaction temperature is 500 °C, and the weight ratio of the catalyst to the oil is 8.02. Therein, conversion rate=gasoline yield+liquefied gas yield+dry gas yield+coke yield; total liquid yield=liquefied gas yield+gasoline yield+diesel yield; coke selectivity=coke yield/conversion rate. The evaluation results are shown in Table 4.

**Table 3 : raw oil properties**

| | raw oil | | |
|---|---|---|---|
| density (20°C), g/cm³ | | | 0.9044 |
| refractive index (20°C) | | | 1.5217 |
| viscosity (100°C), mm²/s | | | 9.96 |
| freezing point, °C | | | 40 |
| aniline point, °C | | | 95.8 |
| | C, m% | | 85.98 |
| | H, m% | | 12.86 |
| | S, m% | | 0.55 |
| | N, m% | | 0.18 |
| carbon residue, m% | | | 3.0 |

| boiling range, °C | | | |
|---|---|---|---|
| | initial boiling point | | 243 |
| | | 5% | 294 |
| | | 10% | 316 |
| | | 30% | 395 |
| | | 50% | 429 |
| | | 70% | 473 |
| | | 90% | - |

**Table 4: evaluation results**

| | Example 1 | Example 2 | Example 3 | Example 4 | Example 5 | Comparative example 1 | Comparative example 2 | Comparative example 3 | |
|---|---|---|---|---|---|---|---|---|---|
| catalyst name | C1 | C2 | C3 | C4 | C5 | DC1 | DC2 | DC3 | |
| product distribution % | dry gas | 1.79 | 1.84 | 1.77 | 1.94 | 1.82 | 1.94 | 1.76 | 1.80 |
| | liquefied gas | 17.32 | 17.67 | 17.46 | 17.75 | 17.38 | 17.37 | 16.89 | 17.34 |
| | gasoline | 53.07 | 54.29 | 52.66 | 53.47 | 52.94 | 52.12 | 51.64 | 51.34 |
| | diesel oil | 13.63 | 12.78 | 14.03 | 12.81 | 13.83 | 12.68 | 13.39 | 13.48 |
| | heavy oil | 6.23 | 6.31 | 6.81 | 6.09 | 6.59 | 7.01 | 7.75 | 7.92 |
| | coke | 7.96 | 7.11 | 7.27 | 7.94 | 7.44 | 8.88 | 8.57 | 8.12 |
| conversion rate, % | | 80.14 | 80.91 | 79.16 | 81.10 | 79.58 | 80.31 | 78.86 | 78.60 |
| total liquid yield, % | | 84.02 | 84.74 | 84.15 | 84.03 | 84.15 | 82.17 | 81.92 | 82.16 |
| coke selectivity, % | | 9.93 | 8.79 | 9.18 | 9.79 | 9.35 | 11.06 | 10.87 | 10.33 |

As shown in Table 2 and the drawings, compared with the Comparative Examples 1-3, the total pore volume and the proportion of the macro and meso pores in Examples 1-5 have significantly increased, while still maintaining a good attrition resistance. The results in Table 4 indicate that, correspondingly, compared with the catalysts DC1-DC3 prepared in Comparative Examples 1-3, the catalysts C1-C5 prepared in the Examples of the present invention have a lower heavy oil yield, an increased total liquid yield, a decreased coke yield, and a significantly improved coke selectivity. From this, it can be seen that the catalytic cracking catalyst prepared by the present invention has a rich macro and meso pore structure, which brings an excellent heavy oil cracking ability and a good coke selectivity, while also possessing a good catalyst strength.

The present application is illustrated above in combination with preferable embodiments. However, these embodiments are only exemplary and serve only as an illustrative purpose. On this basis, various replacements and improvements can be made to the present application, all of which fall within the scope of protection of the present application.

## Claims

1. A composition for catalytic cracking, which, based on a dry weight of the composition, comprises: 10-35% by weight of a meso and macro pore aluminum oxide, 5-30% by weight of an acidifying binder, 2-20% by weight of a second binder, 20-60% by weight of a zeolite and 5-50% by weight of a clay, a weight ratio of the acidifying binder to the meso and macro pore aluminum oxide being 0.5-1.0; the meso and macro pore aluminum oxide is an aluminum oxide with a pseudo boehmite structure, which has a total pore volume of 0.5-2.0 mL/g, an average pore size of 5-30 nm, and a specific surface area of 250-450 m ²/g, wherein a pore volume of 5-100 nm pores accounts for 80% or more of the total pore volume; wherein, the composition, after spray drying and calcination, has an attrition index of not more than 3.0% · h⁻¹, preferably 1.0-3.0% · h⁻¹, and a pore volume retention of 70% or higher, preferably 80%-100%, for the 5-100 nm pores; the pore volume retention for the 5-100 nm pores is calculated as follows:
the pore volume retention for the 5-100 nm pores = the pore volume of the 5-100 nm pores in a catalytic cracking catalyst/(the pore volume of the 5-100 nm pores in the meso and macro pore aluminum oxide × a content of the meso and macro pore aluminum oxide in the catalytic cracking catalyst).

2. The composition according to claim 1, **characterized in that**, based on the dry weight of the composition, the composition comprises: 10-30% by weight of the meso and macro pore aluminum oxide, 8-25% by weight of the acidifying binder, 2-15% by weight of the second binder, 30-45% by weight of the zeolite and 10-40% by weight of the clay, the weight ratio of the acidifying binder to the meso and macro pore aluminum oxide being 0.5-0.8; the meso and macro pore aluminum oxide is an aluminum oxide with a pseudo boehmite structure, which has a total pore volume of 0.7-1.5 mL/g, an average pore size of 6-20 nm and a specific surface area of 300-400 m²/g, wherein the pore volume of the 5-100 nm pores accounts for 80%-95% of the total pore volume.

3. The composition according to claim 1, **characterized in that** the acidifying binder is in an aqueous form with a pH value of 1.0-5.0; the second binder is the same as or different from the acidifying binder.

4. The composition according to claim 1, **characterized in that** the acidifying binder is one or more selected from the group consisting of aluminum sol, silica sol, silica aluminum sol, the second binder is one or more selected from the group consisting of an acidifying pseudo boehmite, silica sol, aluminum sol, silica aluminum sol, aluminum phosphate sol, zirconium sol, and a weight ratio of the acidifying binder to the second binder is 0.5-5.0.

5. The composition according to claim 4, **characterized in that** the acidifying binder is aluminum sol, and the second binder is the acidifying pseudo boehmite.

6. The composition according to claim 1, **characterized in that** the clay is one or more selected from the group consisting of kaolin, bentonite, montmorillonite, sepiolite and diatomaceous earth.

7. The composition according to claim 1, **characterized in that** the zeolite is one or more selected from the group consisting of NaY type zeolite, Y zeolite with a high silica-alumina ratio obtained after modification of NaY type zeolite, MFI type zeolite, and β zeolite.

8. The composition according to claim 7, **characterized in that** the Y zeolite with a high silica-alumina ratio obtained after modification of NaY type zeolite is HY, REY, REHY, USY or REUSY.

9. A method for preparing a catalytic cracking catalyst using the composition according to any one of claims 1-8, which comprises following steps carried out in order:
(1) mixing and stirring aluminum oxide with a meso and macro pore structure, a clay and all acidifying binders as needed and deionized water evenly to obtain an acidified slurry;
(2) adding a zeolite to the acidified slurry, mixing and stirring evenly to obtain a second slurry; and
(3) adding a second binder to the second slurry, mixing and stirring, spray drying and calcining an obtained mixed slurry.

10. The method according to claim 9, **characterized in that**, based on the dry weight of the catalyst,
in the step (1), 10-35% by weight of the aluminum oxide with the meso and macro pore structure, 5-50% by weight of the clay, 5-30% by weight of the acidifying binder are mixed with deionized water and pulped for not less than 15min to obtain an acidified slurry; a solid content of the resulting acidified slurry is 15-40% by weight;
in the step (2), 20 to 60 weight% of the zeolite is added to the acidified slurry, mixed and pulped for not less than 15min to obtain the second slurry with a solid content of 15 to 40 % by weight; and/or
in the step (3), 2-20 % by weight of the second binder is added to the second slurry, and the resulting mixed slurry has a solid content of 15-40% by weight.

11. The method according to claim 9 or 10, **characterized in that** no other acid is added in the method.

12. A catalytic cracking catalyst prepared from the composition according to any one of claims 1-8 by the method according to claim 9 or 10.

13. A catalytic cracking catalyst according to claim 12, **characterized in that**, as determined by a low-temperature nitrogen adsorption method, the total pore volume of the catalytic cracking catalyst is not less than 0.200 mL/g, wherein the pore volume of meso and macro pores with a pore size of 2-100 nm accounts for 70% or more of the total pore volume, and the pore volume of 4-50 nm mesoporous pores accounts for 60% or more of the total pore volume.

14. A catalytic cracking catalyst according to claim 12 or 13, **characterized in that**, as determined by a low-temperature nitrogen adsorption method, the total pore volume of the catalytic cracking catalyst is 0.200-0.300 mL/g;
wherein, the pore volume of the meso and macro pores with the pore size of 2-100 nm accounts for 75%-95%, or 80%-95% of the total pore volume; and/or
wherein, the pore volume of the 4-50 nm mesoporous pores accounts for 65%-85% of the total pore volume.
